(19) Europäisches Patentamt
European Patent Office
Office européen des brevets

(11) Veröffentlichungsnummer: **0 059 353**
**B2**

(12) # NEUE EUROPÄISCHE PATENTSCHRIFT

(45) Veröffentlichungstag der neuen Patentschrift: **04.07.90**

(51) Int. Cl.$^5$: **C 08 G 12/32,** C 04 B 24/30, C 08 L 61/28

(21) Anmeldenummer: **82101064.2**

(22) Anmeldetag: **12.02.82**

(54) **Verfahren zur Herstellung von hochkonzentrierten, niedrigviskosen, wässrigen Lösungen von Melamin/Aldehydharzen sowie deren Verwendung als Zusatz zu Baustoffen.**

(30) Priorität: **02.03.81 DE 3107852**

(43) Veröffentlichungstag der Anmeldung: **08.09.82 Patentblatt 82/36**

(45) Bekanntmachung des Hinweises auf die Patenterteilung: **11.09.85 Patenblatt 85/37**

(45) Bekanntmachung des Hinweises auf die Entscheidung über den Einspruch: **04.07.90 Patentblatt 90/27**

(84) Benannte Vertragsstaaten: **AT BE CH DE FR GB IT LI NL SE**

(56) Entgegenhaltungen:
**EP-A-0 006 135**
**AT-A-263 607**
**DE-A-1 745 441**
**DE-A-2 826 447**
**DE-B-2 359 291**
**DE-C-1 669 041**
**DE-C-17 963 13**
**GB-A-628 818**
**GB-A-1 169 582**
**US-A-2 730 516**
**US-A-3 661 829**
**US-A-3 985 696**
**ZA-A-78 202 2**

**Die Akte enthält technische Angaben, die nach dem Eingang der Anmeldung eingereicht wurden und die nicht in dieser Patentschrift enthalten sind.**

(73) Patentinhaber: **Sika AG, vorm. Kaspar Winkler & Co. Tüffenwies 16-22 CH-8048 Zürich (CH)**

(72) Erfinder: **Bürge, Theodor A. Waldrütistrasse 3 CH-8954 Geroldswil (CH)**
Erfinder: **Widmer, Jürg, Dr. Limmattalstrasse 3 CH-8049 Zürich (CH)**
Erfinder: **Meyer, Theodor, Dr. Rosenstrasse 36 CH-8105 Regensdorf (CH)**
Erfinder: **Sulser, Ulrich Hönggerstrasse 12 CH-8102 Oberengstringen (CH)**

(74) Vertreter: **Blum, Rudolf Emil Ernst et al c/o E. Blum & Co Patentanwälte Vorderberg 11 CH-8044 Zürich (CH)**

(56) Entgegenhaltungen:
**Patent Abstracts of Japan Band 5, Nr. 94, 19. Juni 1981**
**Römpps Chemie Lexikon, 6. Auflage 1966, Seite 4086**
**ibid, 7. Auflage, 1975, S. 3391/92**

**EP 0 059 353 B2**

Courier Press, Leamington Spa, England.

(56) Entgegenhaltungen:

**ibid, 8. Auflage, S. 2523/24**

**Sonderdruck aus Ciment Lime and Gravel 1973, A. Aignesberger,'The use of anionic melamine as a concrete additive**
**Hackh's Chemical Dictionary, 1944, S. 540**

**Beschreibung**

Die vorliegende Erfindung betrifft ein Verfahren zur Herstellung von hochkonzentrierten, niedrigviskosen, wäßrigen Lösungen von Melamin/Aldehydharzen, bei dem die Kondensation in der ersten Stufe in Gegenwart von Wasser im alkalischen Bereich, die zweite Stufe im sauren Bereich durchgeführt wird und schließlich durch Zugabe einer alkalischen Verbindung basisch gestellt wird.

Aus der deutschen Patentschrift 1 671 017 ist es bereits bekannt, sulfit- oder sulfonsäure-modifizierte Harze auf der Basis eines Amino-S-triazins mit mindestens 2 $NH_2$-Gruppen für die Verbesserung der Güteeigenschaften von Baustoffen aus anorganischen Bindemitteln zu verwenden. Diese Harze weisen jedoch erhebliche Nachteile auf, welche in der deutschen Patentschrift 2 359 291 zum Teil aufgeführt sind. So sind beispielsweise Lösungen niedriger Viskosität auf der Basis eines Amino-S-triazins nur mit einem Feststoffgehalt bis zu 20 Gewichtsprozent herstellbar.

Die D-PS 1 671 017 beschreibt neben der Herstellung konventioneller sulfitmodifizierter Melamin/Formaldehydharze auch ein Verfahren zur Herstellung höher konzentrierter Lösungen von Polykondensationsprodukten, bei welchem anstelle des Melamins von N-sulfonierten Melaminen wie z.B. N-monosulfoniertem Acetoguanamin und N-sulfoniertem Benzoguanamin ausgegangen wird. Diese Sulfonsäurederivate müssen aber zuerst synthetisiert und isoliert werden. Sie sind daher sehr schwer zugänglich und haben in der Praxis keine Verwendung gefunden. Die erwähnten, N-sulfonierte Melamine enthaltenden Harze, gemäß D-PS 1 671 017, weisen als Nachteil für viele Anwendungen auch eine zu hohe Viskosität auf. Daher müssen solche konventionell hergestellte Harzlösungen, die meistens mit Hilfe von Dosierpumpen durch lange Leitungen zum Verarbeitungsplatz gefördert werden, vorgängig verdünnt werden, wodurch zahlreiche Vorteile, welche hochkonzentrierte Lösungen bieten, verlorengehen.

Gemäß diesen bekannten Verfahren werden zur Erzielung des für die Polykondensation notwendigen pH-Wertes unter 4,5 Mineralsäuren eingesetzt. Es sei in diesem Zusammenhang beispielsweise auf die deutsche Auslegeschrift 2 359 291 verwiesen, in der eine Verfahren zur Herstellung wäßriger Lösungen von anionische Sulfonsäuregruppen enthaltenden Melamin-Formaldehyd-Kondensations-produkten durch mehrstufige Kondensation bei unterschiedlichen pH-Werten beschrieben ist, bei dem man in der ersten Stufe Melamin, Formaldehyd und ein Alkalisulfit in einem bestimmten Molverhältnis bei einem pH-Wert von 10 bis 13 auf 60°C bis 80°C erhitzt, anschließend mit verdünnter Mineralsäure bei einem pH-Wert von 3,0 bis 4,5 und einer Temperatur von 30°C bis 60°C die Kondensation 30 bis 90 Minuten lang fortsetzt und schließlich das erhaltene Kondensationsprodukt bei einem pH-Wert von 7,5 bis 9,0 auf eine Temperatur von 70°C bis 95°C weiter erhitzt, bis die Viskosität bei 20°C und einem 20%igen Feststoffgehalt 5 bis 40 mPa s beträgt.

Gemäß den Beispielen dieser deutschen Auslegeschrift benötigt man zu dieser abschließenden Erhitzung unter alkalischen Bedingungen etwa eine Stunde.

Wie beispielsweise aus Seite 2, Zeilen 29 bis 34 dieser deutschen Offenlegungsschrift ersichtlich ist, soll in der zweiten, unter sauren Bedingungen geführten Kondensationsstufe die Verwendung von Salzsäure als Mineralsäure vermieden werden, weil bei Verwendung des Kondensationsproduktes in armiertem Beton durch die Chloridionen eine hohe Korrosionsgefahr gegeben ist. Auch Phosphorsäure soll nicht als Mineralsäure verwendet werden, weil diese zu einer Verzögerung des Abbindens von Beton führt. In der Praxis wird deshalb in der zweiten Stufe als Mineralsäure immer Schwefelsäure verwendet.

Diese Verwendung von Schwefelsäure bedingt aber, daß die im Endprodukt enthaltenen Sulfate abgetrennt werden müssen. Zweckmäßigerweise geschieht dies durch Auskristallisieren bei tiefer Temperatur und Abtrennen nach üblichen Methoden.

Ein gewisser Anteil von Sulfat bleibt aber dennoch im Endprodukt enthalten und verunmöglicht so die Mischbarkeit mit z.B. Calciumsalzen der Ligninsulfonsäuren oder mit Calciumsalzen sulfonisierter Naphthalin/Formaldehydpolykondensate, weil dadurch unlösliches Calciumsulfat ausgefällt wird.

In der CH-PS 602 809 wird vorgeschlagen, das Melamin im Gemisch mit bis zu 40 Molprozent Harnstoff zu verwenden, um zu niederviskosen Lösungen zu gelangen. Diese setzt allerdings voraus, daß die Kondensation in einem zeitraubenden, mehrstufigen Verfahren durchgeführt wird.

Ein weiterer Nachteil dieser konventionell hergestellten Melaminharze zeigt sich beim praktischen Einsatz. Beton oder Mörtel, welche diese bereits bekannten Harze enthalten, weisen im allgemeinen einen relativ raschen Rückgang der Verarbeitbarkeit auf. Die Fließfähigkeit und die Verdichtungswilligkeit gehen beispielsweise verloren und die Pumpbarkeit wird gewöhnlich verunmöglicht.

Handelsübliche, wasserlösliche Melamin/Formaldehyd-Harze lassen sich gemäß Schema 1 bekanntlich dadurch herstellen, daß man Melamin 1 in einer ersten Stufe (siehe Schema 1) bei pH-Werten zwischen 9 und 12 mit Formaldehyd und Alkalisulfit bei Temperaturen von 70—90°C zu einem Vorkondensat umsetzt.

Schema 1

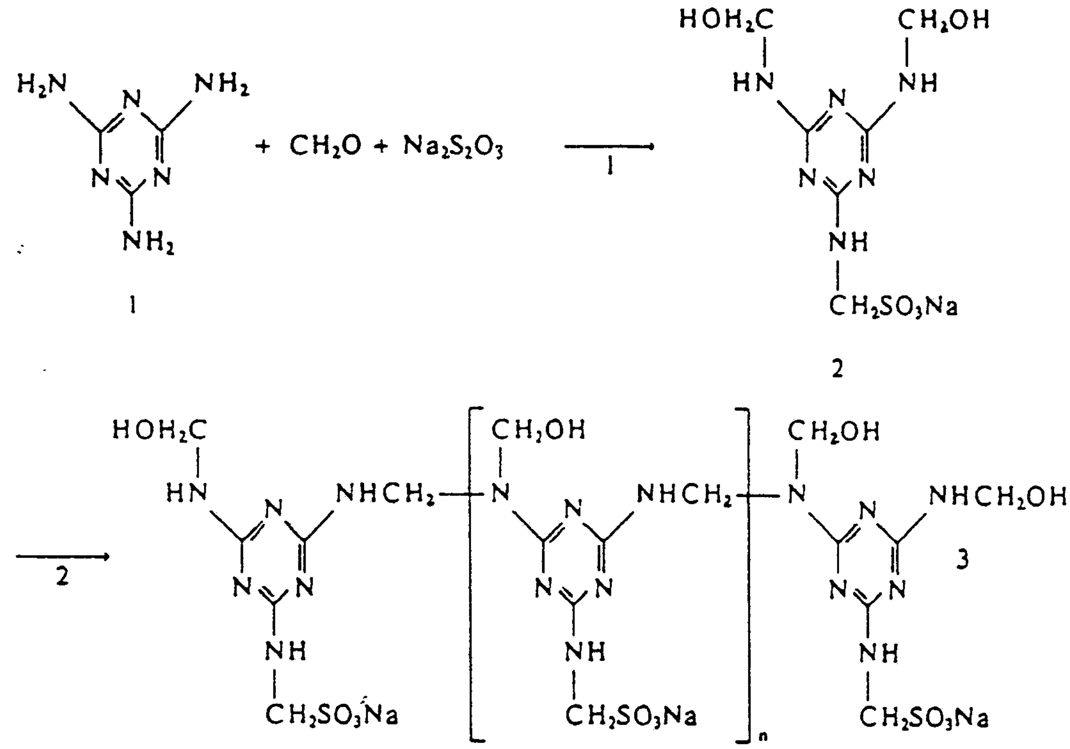

1

2

3

Diese Vorkondensat besteht aus einem Gemisch partiell sulfonierter Methylolverbindungen von z.B. Typ 2 (Schema 1). Der Methylolierungsgrad hängt ab von molaren Verhältnis von Formaldehyd zu Melamin. In einer zweiten Stufe erfolgt dann in Gegenwart von Mineralsäuren bei pH-Werten zwischen 1,5 und 4,5 und bei Temperaturen zwischen 40°C und 60°C die eigentliche Polykondensation des Produktes von Typ 2 zum Produkt vom Typ 3, welches dann zur Erhöhung der Lagerstabilität in einer 3. Stufe noch 1—2 Stunden bei pH-Werten zwischen 8 und 9 auf einer Temperatur von 80—90°C gehalten wird.

Die so hergestellten Harzlösungen besitzen je nach den in Reaktionsstufe 2 gewählten Reaktionsbedingungen verschiedene Viskositäten, die die Gebrauchseigenschaften bestimmen. So lassen sich zum Beispiel bei geeignet gewählten milden Bedingungen Harzlösungen mit einem Feststoffgehalt von 40% und einem Viskositätsbereich von 500—1000 mPa s oder z.B. (DE—A— 2 359 291) von 5—40 mPa s bei einem Feststoffgehalt von 20% herstellen. Alle diese Harzlösungen besitzen jedoch die bereits erwähnten Nachteile des Sulfatgehaltes.

In der europäischen Patentanmeldung 6 135 werden mit aromatischen Aminosulphonsäuren modifizierte Mischharze aus Melamin, Harnstoff und Formaldehyd beschrieben. Die Herstellung erfolgt wieder durch Kondensation im alkalischen Bereich, Weiterkondensation im sauren Bereich und abschließender Behandlung im alkalischen Bereich. Zur Einstellung des sauren Bereiches wird in diesem Falle entweder Schwefelsäure oder Ameisensäure verwendet. Durch die Verwendung von Ameisensäure werden zwar die Nachteile der Anwesenheit von Sulfationen vermieden, jedoch ist das Arbeiten mit Ameisensäure nicht nur unangenehm, sondern die Moleküle der Ameisensäure sind nicht in der Lage, durch chemische Reaktion in das Mischharz eingebaut zu werden und liegen daher in den Harzlösungen als unerwünschter Begleitstoff vor oder werden daraus entfernt.

Gegenstand der vorliegenden Erfindung ist nun ein Verfahren zur Herstellung von hochkonzentrierten, niedrigviskosen, wäßrigen Lösungen von Melamin/Aldehydharzen, bei dem die Kondensation in der ersten Stufe in Gegenwart von Wasser im alkalischen Bereich, die zweite Stufe im sauren Bererich durchgeführt wird und schließlich durch Zugabe einer basischen Verbindung alkalisch gestellt wird, das dadurch gekennzeichnet ist, daß man in einer ersten Stufe Melamin und einen Aldehyd bei erhöhter Temperatur in alkalischem Medium und in Gegenwart von Wasser mit wenigstens einer Verbindung (I), ausgewählt aus der Gruppe, bestehend aus einem Alkalisulfit, Erdalkalisulfit, einem Alkalisulfamat, einem Erdalkalisulfamat, einer Aminosulfonsäure, einer Aminocarbonsäure und einer Aminodicarbonsäure zu einem Vorkonkdensat umsetzt wobei man das Melamin, den Aldehyd und die Verbindung (I) in einem molaren Verhältnis von 1:3,5 bis 6:0,5 bis 1 einsetzt, in einer zweiten Stufe anschließend dieses Vorkondensat bei einem pH-Wert im Bereich von 5,5 bis 7,0 einer Polykondensation unterwirft, indem man mit wenigstens einer Verbindung (II), ausgewählt aus der Gruppe, bestehend aus Sulfaminsäure, einer Aminocarbonsäure, einer Aminodicarbonsäure, einer Hydroxycarbonsäure, einer Polyhydroxycarbonsäure und einer Aminosulfonsäure, ansäuert, und nach beendigter Polykondensation

abschließend die erhaltene Harzlösung durch Zugabe wenigstens einer basischen Verbindung alkalisch stellt.

In der ersten Stufe des erfindungsgemäßen Verfahrens wird als Aldehyd vorzugsweise Formaldehyd verwendet. Der Formaldehyd kann als Gas, in Form von Lösungen, vorzugsweise in Form von wäßrigen Lösungen oder als Festkörper, beispielsweise als Paraformaldehyd, verwendet werden.

Im erfindungsgemäßen Verfahren wird in der ersten Stufe vorzugsweise bei Temperaturen von 75°C bis 100°C gearbeitet. Arbeitet man bei Temperaturen unterhalb von 75°C, so löst sich im allgemeinen das Melamin, zum Beispiel in Wasser, schlecht. Wird bei höheren Temperaturen gearbeitet, so läuft die exotherme Reaktion in der Regel so rasch ab, daß unlösliche Harze entstehen können.

In der zweiten Stufe des erfindungsgemäßen Verfahrens wird dann durch Zugabe der Verbindung (II) der pH-Wert auf 5,5 bis 7,0 eingestellt und die Polykondensation weitergeführt, wobei die eingesetzte saure Verbindung in das Harzmolekül mit eingebaut wird und so das Polymermolekül modifiziert wird.

Schon P. F. Feraud und P. Le Henaff (Bull. Soc. Chem. Fr. 1968 [5], 1968) haben gezeigt, daß Aminocarbonsäuren mit Formaldehyd in wäßrigen Lösungen zu N-Hydroxymethylaminosäuren der Formel A

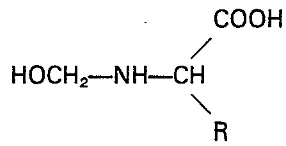

umgesetzt werden.

Aus der US-Patentschrift 2 310 038 ist ferner bekannt, daß Sulfaminsäure mit Formaldehyd zu N-Hydroxymethylsulfaminsäure der Formel B

$$HOCH_2—NH—SO_3H$$

weiterreagiert.

Wie bereits erwähnt wurde, muß die zweite Stufe des erfindungsgemäßen Verfahrens bei einem pH-Wert im Bereich von 5,5 bis 7,0 durchgeführt werden. Würde man nämlich bei einem tiefer liegenden pH-Wert arbeiten, beispielsweise bei einem pH-Wert von 4,5, so besteht die Gefahr, daß die Reaktion bei den bevorzugten Temperaturen im Bereich von 75°C bis 100°C so rasch abläuft, daß unlösliche feste Harze entstehen.

Die nache dem erfindungsgemäßen Verfahren hergestellten Lösungen von Melamin/Aldehydharzen können sowohl verdünnt als auch verdickt werden; insbesondere können sie sprühgetrocknet und in einem späteren Zeitpunkt wieder aufgelöst werden.

Üblicherweise wird das erfindungsgemäße Verfahren bei umgebendem Druck durchgeführt. Für den Fachmann ist es naheliegend, daß das erfindungsgemäße Verfahren auch bei Überdruck und bei Unterdruck (Vakuum) durchgeführt werden kann.

Die gemäß dem erfindungsgemäßen Verfahren hergestellten Lösungen enthalten in der Regel weniger als 0,1 Gew.-% an Sulfat, was einen Fortschritt gegenüber Teilen des Standes der Technik darstellt.

Als weiterer Vorteil gegenüber den bekannten Amino-S-triazin-Harzen ist beispielsweise zu erwähnen, daß die erfindungsgemäß herstellbaren Harzlösungen auch völlig alkalifrei, z.B. als Salze mehrwertiger Kationen, erhalten werden. Dadurch kann die Alkali-Aggregat-Reaktion vermindert werden; diese Reaktion zwischen Alkalien und gewissen silikatischen Zuschlagstoffen führen bekannterweise zu Treiberscheinungen und resultieren in einer Zerstörung des anorganischen Baustoffes.

Aluminium- oder Ethanolaminsalze wirken normalerweise beschleunigend, während Zinksalze eher verzögernd auf das Abbinden der hydraulischen Bindemittel wirken.

Beispielsweise werden die Verarbeitbarkeit von Frischbeton und die mechanischen Eigenschaften des erhärteten Betons durch den Einsatz der erfindungsgemäß hergestellten Lösungen von Melamin/Aldehydharzen verbessert. In diesem Zusammenhang vergleiche man beispielsweise »Superplasticizers in Concrete«, Volume I und Volume II, Proceeding of an International Symposium, gehalten in Ottawa, Canada, 29—31, Mai 1978, herausgegeben von V. M. Malhotra, E. E. Berry und T. A. Wheat und die dort zitierten Literaturstellen.

Die nach dem erfindungsgemäßen Verfahren hergestellten Lösungen von Melamin/Aldehydharzen können als Zusatz zu Baustoffen, welche anorganische Bindemittel, wie z.B. Zement, Kalk und Gips enthalten, vorzugsweise in Mengen von 0,01 bis 25 Gew.-%, bezogen auf das Gewicht des anorganischen Bindemittels, verwendet werden.

Die folgenden Beispiele dienen der näheren Erläuterung der Erfindung.

## Beispiel 1

Eine Lösung, bestehend aus 130 Gew.-Teilen (1,6 Mol) 37%igem Formalin, 120 Gew.-Teilen Wasser und 43,4 Gew.-Teilen 50%ige Natronlauge, wurde nacheinander mit 44,6 Gew.-Teilen (0,48 Mol) Sulfaminsäure und 56 Gew.-Teilen (0,44 Mol) Melamin versetzt. Danach wurde auf eine Temperatur von 80°C erwärmt und dann noch während 60 Minuten bei dieser Temperatur gerührt. Anschließend wurde das Vorkondensat zuerst mit 2,6 Gew.-Teilen 50%iger Natronlauge und dann mit 19 Gew.-Teilen (0,1 Mol) Sulfanilsäure versetzt, wobei der pH-Wert auf 5,9 abfiel. Die Reaktionsmischung wurde nun noch während

1 Stunde bei einer Temperatur von 80°C gehalten, und anschließend mit Natronlauge auf einen pH-Wert von 10,1 eingestellt und auf Raumtemperatur abgekühlt. Man erhielt eine klare, farblose Polymerlösung mit einem Trockengehalt von 41% und einer Viskosität von 37 mPa s (Brookfield Rot.-Viskosimeter).

Beispiel 2

Ein analog zu Beispiel 1 hergestelltes Vorkondensat wurde mit 2 Gew.-Teilen 50%iger Natronlauge und anschließend mit 20 Gew.-Teilen Glutaminsäure versetzt. Die Lösung mit einem pH-Wert von 6,0 wurde noch während 60 Minuten auf einer Temperatur von 80°C gehalten. Anschließend wurde mit Natronlauge ein pH-Wert von 10,0 eingestellt und auf eine Temperatur von 20°C abgekühlt. Es wurde eine farblose, klare Polymerlösung mit einem Feststoffgehalt von 41,5 und einer Viskosität von 55 mPa s erhalten.

Beispiel 3

In eine Suspension, bestehend aus 260 Gew.-Teilen 37%igem (3,2 Mol) Formalin, 260 Gew.-Teilen Wasser, 10 Gew.-Teilen Calciumoxid und 112 Gew.-Teilen Melamin, wurde unter Rühren bei einer Temperatur von 80°C so lange ein kräftiger Schwefeldioxidstrom eingeleitet, bis eine klare Lösung entstand. Anschließend wurde während 30 Minuten bei einer Temperatur von 80°C gerührt und dann die Lösung mit 28 Gew.-Teilen (0,28 Mol) Sulfaminsäure versetzt, wonach ein pH-Wert von 5,9 gemessen wurde. Danach wurde die Reaktionslösung während 75 Minuten auf einer Temperatur von 85°C gehalten und dann durch Zugabe von 9 Gewichtstellen Calciumoxid ein pH-Wert von 9,5 eingestellt. Nach dem Abkühlen auf Zimmertemperatur wurde eine klare, farblose Lösung des Calciumsalzes mit einem Feststoffgehalt von 40% und einer Viskosität von 43 mPa s erhalten.

Durch Umsetzung des Calciumsalzes der Polymerlösung mit leicht löslichen Sulfaten und Abtrennung des ausgefällten Gipses können Salze von mehrwertigen Kationen wie z.B. Aluminium oder Zink hergestellt werden.

Beispiel 4

650 Gewichtsteile (8,02 Mol) 37%iges Formalin in 650 Gew.-Teilen Wasser wurden mit Natronlage auf einen pH-Wert von 10,1 gebracht und dann nacheinander mit 280 Gew.-Teilen (2,22 Mol) Melamin und 224 Gew.-Teilen (1,18 Mol) Natriumpyrosulfit versetzt. Nun wurde auf eine Temperatur von 80°C erwärmt und die klare Lösung während 45 Minuten auf dieser Temperatur gehalten. Danach wurden 25 Gew.-Teile 50%ige Natronlauge zugetropft und anschließend nacheinander 45 Gewichtsteile Sulfaminsäure und 45 Gewichtsteile Glutaminsäure eingetragen. Die klare Reaktionslösung mit einem pH-Wert von 5,8 wurde nun während 60 Minuten auf einer Temperatur von 85°C gehalten und dann wurde durch Zugabe von Natronlauge ein pH-Wert von 10,0 eingestellt. Nach dem Abkühlen auf Raumtemperatur wurde eine klare, farblose Lösung mit einem Feststoffgehalt von 40% und einer Viskosität von 51 mPa s erhalten.

Beispiel 5

325 Gewichtsteile (4,0 Mol) 37%iges Formalin in 220 Gew.-Teilen Wasser wurden durch Zugabe von Natronlauge auf einen pH-Wert von 10,0 eingestellt und dann mit 112 Gew.-Teilen (0,88 Mol) Melamin und 89,6 Gew.-Teilen (0,48 Mol) Natriumpyrosulfit versetzt und während 30 Minuten auf einer Temperatur von 80°C gehalten. Diese Lösung wurde danach mit 10 Gew.-Teile 80%iger Milchsäure auf einen pH-Wert von 5,9 eingestellt und während 1 Stunde bei einer Temperatur von 75°C gerührt. Anschließend wurde durch Zugabe von Natronlauge ein pH-Wert von 10,2 eingestellt. Es wurde eine farblose, klare Polymerlösung mit einem Feststoffgehalt von 40% und einer Viskosität von 50 mPa s erhalten.

Beispiel 6

130 Gewichtsteile (1,60 Mol) 37%iges Formalin in 130 Gew.-Teile Wasser wurden vorgelegt und mit Natronlauge fauf einen pH-Wert von 10,0 eingestellt. Anschließend wurden 56 Gew.-Teile (0,44 Mol) Melamin und 44,8 Gew.-Teile (0,24 Mol) Natriumpyrosulfit eingetragen und auf eine Temperatur von 80°C erwärmt, wobei eine klare Lösung entstand. Nun wurde noch während 30 Minuten bei einer Temperatur von 80°C gerührt und dann mit Natronlauge ein pH-Wert von 11,0 eingestellt. Dann wurden 14 Gewichtsteile (0,14 Mol) Sulfaminsäure eingetragen und die Lösung bei einem pH-Wert von 5,9 während 75 Minuten bei einer Temperatur von 85°C gehalten. Anschließend wurde mit Natronlauge ein pH-Wert von 10,3 eingestellt und auf Zimmertemperatur abgekühlt. Man erhielt eine klare, farblose Harzlösung mit einem Feststoffgehalt von 40,7% und einer Viskosität von 34 mPa s (Brookfield Rotationsviskosimeter, 20 U/min, Spindel 1).

Beispiel 7

Eine Lösung, bestehend aus 260 Gew.-Teilen (3,20 Mol) 37%igem Formalin und 130 Gew.-Teilen Wasser wurde mit Natronlauge auf einen pH-Wert von 10,0 eingestellt und darauf mit 112 Gew.-Teilen (0,88 Mol) Melamin und 90 Gew.-Teilen (0,49 Mol) Natriumpyrosulfit versetzt. Danach wurde auf eine Temperatur von 80°C erwärmt und während 45 Minuten auf dieser Temperatur gehalten. Anschließend wurden 20 Gew.-Teile 50%ige Natronlauge und 42 Gew.-Teile (0,44 Mol) Sulfaminsäure zugegeben, wobei der pH-Wert auf 5,6 fiel. Dann wurde während 30 Minuten bei einer Temperatur von 80°C kondensiert und anschließend durch Zugabe von Natronlauge eine pH-Wert von 9,7 eingestellt und auf Zimmertemperatur abgekühlt.

Es wurde eine klare, farblose Polymerlösung mit einem Feststoffgehalt von 50% und einer Viskosität von 210 mPa s (Brookfield Rot. Viskosimeter) erhalten.

Beispiel 8

650 Gewichsteile 37%iges Formalin in 600 Gew.-Teilen Wasser wurden nacheinander mit 25 Gew.-Teilen 50%iger Natronlauge, 280 Gew.-Teilen Melamin und 224 Gew.-Teilen Natriumpyrosulfit versetzt, wobei die Temperatur auf 45°C anstieg. Die Suspension wurde innerhalb von 15 Minuten auf eine Temperatur von 80°C geheizt und die entstandene klare Lösung wurde noch während 45 Minuten auf dieser Temperatur gehalten. Danach wurde auf eine Temperatur von 75°C abgekühlt und die Lösung wurde mit 35 Gew.-Teilen Gluconsäure-δ-Lacton versetzt. Dabei fiel der pH-Wert von pH = 10,85 auf pH = 6,45. Das Reaktionsgemisch wurde anschließend während 120 Minuten bei einer Temperatur von 75°C gerührt und dann mit 12,5 Gewichtsteilen 50%iger Natronlauge versetzt und auf Zimmertemperatur abgekühlt. Man erhielt eine klare, farblose Harzlösung mit einem Feststoffgehalt von 40% und einer Viskosität von 43 mPa s.

In den nachfolgenden Tabellen werden Prüfresultate mit den erfindungsgemäß hergestellten Lösungen von Melamin/Formaldehydharzen wiedergegeben.

A. Normenmörtelausbreitmaß

Mörtelmischung aus 1 Gew.-Teil Portlandzement und 3 Gew.-Teilen Sand.

Zement: PC gemäß SJA Norm 215
Sand: 0—5 mm Korngröße

Tabelle 1

| Zusatzmittel gemäß Beispiel | Dosierung*) % | W/Z | Ausbreitmaß in mm nach Minuten 5 | 15 | 30 | 45 | 60 |
|---|---|---|---|---|---|---|---|
| ohne | — | 0,51 | 185 | 182 | 173 | 165 | 160 |
| 1 | 1 | 0,48 | 197 | 181 | 169 | 156 | 148 |
| 4 | 1 | 0,48 | 205 | 197 | 180 | 165 | 150 |
| 5 | 1 | 0,48 | 187 | 175 | 163 | 154 | 143 |
| 6 | 1 | 0,48 | 196 | 183 | 172 | 160 | 150 |
| 7 | 1 | 0,48 | 220 | 196 | 181 | 162 | 154 |

*) Bezogen auf das anorganische Bindemittel.

B. Betonversuche

Betonmischung

| | |
|---|---|
| Zuschläge: | 0–32 mm – Siebkurve gemäß SIA Norm 162 |
| Zement: | PC – SIA Norm 215 |
| Zementgehalt: | 300 kg/m³ |
| Zusatzmittel: | gemäß Beispielen |
| Mischer: | Zwangsmischer Typ EIRICH |
| Betonherstellung: | Zuschläge und Zement trocken während einer Minute mischen, dann Wasser mit darin gelöstem Zusatzmittel zugeben und weitere 2 Minuten mischen. |

Tabelle 2

| | Ohne | Zusatzmittel gemäß Beispiel 1 | 2 | 5 | 6 | 7 |
|---|---|---|---|---|---|---|
| Dosierung | – | 1,0 | 1,0 | 1,0 | 1,0 | 1,0 |
| Mischtemperatur °C | 17,0 | 17,5 | 17,5 | 17,5 | 17,0 | 17,5 |
| W/Z | 0,57 | 0,45 | 0,45 | 0,45 | 0,45 | 0,45 |
| Ausbreitmaß (cm) | 41 | 30 | 34 | 30 | 35 | 30 |
| Dichte (kg/l) | 2,412 | 2,450 | 2,462 | 2,462 | 2,443 | 2,456 |
| Luft % | 0,8 | 1,4 | 1,1 | 1,2 | 1,5 | 1,3 |
| Druckfestigkeiten: | | | | | | |
| 1 Tag | | | | | | |
| % | 100 | 279,7 | 244,5 | 279,3 | 257,0 | 326,7 |
| N/mm² | 4,79 | 13,4 | 11,71 | 13,38 | 12,31 | 15,65 |
| 7 Tag | | | | | | |
| % | 100 | 190,5 | 179,0 | 190,2 | 183,5 | 185,3 |
| N/mm² | 19,95 | 38,0 | 35,72 | 37,94 | 36,6 | 36,97 |
| 21 Tage | | | | | | |
| % | 100 | 155,8 | 151,8 | 153,6 | 160,3 | 154,8 |
| N/mm² | 27,75 | 43,24 | 42,13 | 42,62 | 44,49 | 42,96 |
| 35 Tage | | | | | | |
| % | 100 | 152,6 | 148,1 | 152,0 | 148,4 | 150,5 |
| N/mm² | 30,3 | 46,09 | 44,72 | 45,9 | 44,81 | 45,46 |

Tabelle 3

| | Ohne | Zusatzmittel gemäß Beispiel 1 | 2 | 5 | 6 | 7 |
|---|---|---|---|---|---|---|
| Dosierung % | – | 2,0 | 2,0 | 2,0 | 2,0 | 2,0 |
| Mischtemperatur °C | 17,0 | 17,5 | 17,5 | 18,0 | 18,0 | 17,5 |
| W/Z | 0,57 | 0,425 | 0,425 | 0,425 | 0,425 | 0,425 |
| Ausbreitmaß (cm) | 40 | 32 | 37 | 34 | 47 | 44 |
| Dichte (kg/l) | 2,418 | 2,468 | 2,468 | 2,468 | 2,437 | 2,475 |
| Luft % | 0,7 | 0,8 | 0,9 | 1,1 | 1,8 | 0,8 |

Tabelle 3 (Fortsetzung)

| | Ohne | Zusatzmittel gemäß Beispiel 1 | 2 | 5 | 6 | 7 |
|---|---|---|---|---|---|---|
| Druckfestigkeiten: | | | | | | |
| 1 Tag | | | | | | |
| % | 100 | 445,0 | 394,1 | 432,3 | 357,1 | 482,5 |
| N/mm² | 4,24 | 18,87 | 16,71 | 18,33 | 15,14 | 20,46 |
| 7 Tage | | | | | | |
| % | 100 | 233,5 | 224,6 | 219,5 | 223,0 | 227,2 |
| N/mm² | 19,6 | 43,8 | 44,03 | 43,03 | 43,7 | 44,54 |
| 21 Tage | | | | | | |
| % | 100 | 192,2 | 190,4 | 187,8 | 184,5 | 198,4 |
| N/mm² | 26,13 | 50,23 | 49,75 | 49,07 | 48,22 | 51,85 |
| 35 Tage | | | | | | |
| % | 100 | 181,0 | 185,1 | 180,0 | 180,6 | 185,7 |
| N/mm² | 28,0 | 50,69 | 51,83 | 50,39 | 50,58 | 51,99 |

Tabelle 4

| | Ohne | Zusatzmittel gemäß Beispiel 1 | 2 | 5 | 6 | 7 |
|---|---|---|---|---|---|---|
| Dosierung % | – | 3,0 | 3,0 | 3,0 | 3,0 | 3,0 |
| Mischtemperatur °C | 17,5 | 17,5 | 18,0 | 18,0 | 18,0 | 18,0 |
| W/Z | 0,57 | 0,41 | 0,41 | 0,41 | 0,41 | 0,41 |
| Ausbreitmaß (cm) | 44 | 30 | 30 | 30 | 46 | 33 |
| Dichte (kg/l) | 2,418 | 2,481 | 2,475 | 2,468 | 2,431 | 2,481 |
| Luft % | 0,6 | 0,8 | 0,6 | 1,0 | 1,5 | 0,6 |
| Druckfestigkeiten: | | | | | | |
| 1 Tag | | | | | | |
| % | 100 | 410,1 | 378,9 | 420,9 | 309,4 | 381,4 |
| N/mm² | 4,46 | 18,29 | 16,9 | 18,77 | 13,8 | 17,01 |
| 7 Tage | | | | | | |
| % | 100 | 223,3 | 209,3 | 213,7 | 207,6 | 218,6 |
| N/mm² | 19,65 | 43,87 | 41,13 | 41,99 | 40,79 | 42,96 |
| 21 Tage | | | | | | |
| % | 100 | 194,0 | 196,7 | 195,9 | 188,1 | 190,0 |
| N/mm² | 25,32 | 49,12 | 49,81 | 49,61 | 47,62 | 48,10 |
| 35 Tage | | | | | | |
| % | 100 | 189,5 | 187,8 | 191,1 | 177,5 | 179,6 |
| N/mm² | 27,73 | 52,59 | 52,08 | 53,0 | 49,21 | 49,79 |

**Patentansprüche**

1. Verfahren zur Herstellung von hochkonzentrierten, niedrigviskosen, wäßrigen Lösungen von Melamin/Aldehydharzen, bei dem die Kondensation in der ersten Stufe in Gegenwart von Wasser im alkalischen Bereich, die zweite Stufe im sauren Bereich durchgeführt wird und schließlich durch Zugabe einer basischen Verbindung alkalisch gestellt wird, dadurch gekennzeichnet, daß man in einer Stufe Melamin und einen Aldehyd bei erhöhter Temperatur in alkalischem Medium und in Gegenwart von Wasser mit wenigstens einer Verbindung (I), ausgewählt aus der Gruppe, bestehend aus einem Alkalisulfit, Erdalkalisulfit, einem Alkalisulfamat, einem Erdalkalisulfamat, einer Aminosulfonsäure, einer Aminocarbonsäure und einer Aminodicarbonsäure zu einem Vorkondensat umsetzt, wobei man das Melamin, den Aldehyd und die Verbindung (I) in einem molaren Verhältnis von 1:3,5 bis 6:0,5 bis 1 einsetzt, in einer zweiten Stufe anschließend dieses Vorkondensat bei einem pH-Wert im Bereich von 5,5 bis 7,0 einer Polykondensation unterwirft, indem man mit wenigstens einer sauren Verbindung (II), ausgewählt aus der Gruppe, bestehend aus Sulfaminsäure, einer Aminocarbonsäure, einer Aminodicarbonsäure, einer Hydroxycarbonsäure, einer Polyhydroxycarbonsäure und einer Aminosulfonsäure, ansäuert, und nach beendigter Polykondensation abschließend die erhaltene Harzlösung durch Zugabe wenigstens einer basischen Verbindung (III) alkalisch stellt.

2. Verfahren nach Anspruch 1, dadurch gekennzeichnet, daß man in der ersten Stufe bei einem pH-Wert von 9,0 bis 13,0 arbeitet.

3. Verfahren nach einem der Ansprüche 1 bis 2, dadurch gekennzeichnet, daß man in der ersten Stufe bei einer Temperatur von 75°C bis 100°C arbeitet.

4. Verfahren nach einem der Ansprüche 1 bis 3, dadurch gekennzeichnet, daß man in der zweiten Stufe das Vorkondensat aus der ersten Stufe und die Verbindungen aus der Gruppe II in einem molaren Verhältnis, bezogen auf das in der ersten Stufe verwendete Melamin von 1:0,1 bis 3, einsetzt.

5. Verfahren nach einem der Ansprüche 1 bis 4, dadurch gekennzeichnet, daß man in der zweiten Kondensationsstufe als Verbindung aus der Gruppe II ein Gemisch aus Sulfaminsäure und Glutaminsäure verwendet, vorzugsweise ein Gemisch aus gleichen Gewichtsteilen Sulfaminsäure und Glutaminsäure.

6. Verfahren nach einem der Ansprüche 1 bis 5, dadurch gekennzeichnet, daß man in der zweiten Stufe bei einer Temperatur von 75°C bis 100°C arbeitet.

7. Verfahren nach einem der Ansprüche 1 bis 6, dadurch gekennzeichnet, daß man als basische Verbindung (III) eine Verbindung, ausgewählt aus der Gruppe, bestehend aus einem Alkalihydroxid, einem Erdalkalioxid, einem Erdalkalihydroxid, einem Amin, einem Polyamin, Monoethanolamin, Diethanolamin, Triethanolamin und einer basischen Verbindung eines Übergangsmetalls, einsetzt.

8. Verfahren nach einem der Ansprüche 1 bis 7, dadurch gekennzeichnet, daß man als basische Verbindung (III) eine basische Aluminium- oder Zink-Verbindung einsetzt.

9. Verfahren nach einem der Ansprüche 1 bis 8, dadurch gekennzeichnet, daß man lagerstabile wäßrige Harzlösungen mit einem Feststoffgehalt von 30 bis 50 Gewichtsprozent und einer Viskosität von 5 bis 250 mPa s herstellt.

10. Verfahren nach einem der Ansprüche 1 bis 9, dadurch gekennzeichnet, daß der Aldehyd Formaldehyd ist.

**Revendications**

1. Procédé de préparation de solutions aqueuses de résines mélamine-aldéhyde fortement concentrées, de faible viscosité, dans lequel la condensation est réalisée dans une premier stade en milieu basique en présence d'eau et dans un deuxième stade en milieu acide, qui est ensuite rendu alcalin par l'addition d'un composé basique, caractérisé en ce que, dans un premier stade, on fait réagir la mélamie et un aldéhyde à température accrue, dans un milieu basique et en présenence d'eau, avec au moins un composé (I) choisi dans le groupe formé d'un sulfite de métal alcalin, d'un sulfite de métal alcalino-terreux, d'un sulfamate de métal alcalin, d'un sulfamate de métal alcalino-terreux, d'un acide amino-sulfonique, d'un acide amino-carboxylique et d'un acide amino-dicarboxylique, pour former un précondensat où l'on met en oeuvre la mélamine, l'aldéhyde et le composé (I) dans un rapport molaire de 1:3,5 à 6:0,5 à 1, dans un deuxième stade, ou soumet ensuite ce précondensat à un pH compris entre 5,5 et 7,0, à une polycondensation par acidification avec au moins un composé acide (II) choisi dans le groupe formé de l'acide sulfamique, d'un acide amino-carboxylique, d'un acide amino-dicarboxylique, d'un acid hydroxycarboxylique, d'un poly(acide hydroxy-carboxylique) et d'un acide amino-sulfonique et, la polycondensation étant terminée, on rend la solution de résine formée alcaline par l'addition d'au moins un composé basique (III).

2. Procédé suivant la revendication 1, caractérisé en ce que, dans le premier stade, on travaille à un pH compris entre 9,0 et 13,0.

3. Procédé suivant l'une des revendications 1 et 2, caractérisé en ce que, dans le premier stade, on travaille à une température comprise entre 75 et 100°C.

4. Procédé suivant l'une des revendications 1 à 3, caractérisé en ce que, dans le deuxième stade, le précondensat obtenu dans le premier stade et les composés du groupe II sont mis en oeuvre dans un rapport molaire de 1:0,1 à 3 par rapport à la mélamine employée dans le premier stade.

5. Procédé suivant l'une des revendications 1 à 4, caractérisé en ce que, dans le deuxième stade de condensation, on emploie comme substance du groupe II un mélange d'acide sulfamique et d'acide glutamique, de préférence un mélange en parties pondérales égales.

6. Procédé suivant l'une des revendications 1 à 5, caractérisé en ce que, dans le deuxième stade, on travaille avec une température comprise entre 75 et 100°C.

7. Procédé suivant l'une des revendications 1 à 6, caractérisé en ce que l'on emploie comme composé basique (III), un composé choisi dans le groupe constitué d'un hydroxyde de métal alcalin, d'un oxyde de métal alcalino-terreux, d'un hydroxyde de métal alcalino-terreux, d'un amine, d'une poly-amine, de la mono-éthanol-amine, de la di-éthanol-amine, de la tri-éthanol-amine et d'un dérivé basique d'un métal de transition.

8. Procédé suivant l'une des revendications 1 à 7, caractérisé en ce que l'on emploie comme composé basique (III) un dérivé de l'aluminium ou du zinc.

9. Procédé suivant l'une des revendications 1 à 8, caractérisé en ce que l'on prépare des solutions aqueuses de résines, stables au stockage, d'une teneur en matières solides comprise entre 30 46 50% en poids et d'une viscosité comprise entre 5 et 250 mPa.s.

10. Procédé suivant l'une des revendications 1 à 9, caractérisé en ce que l'on utilise comme aldéhyde l'aldéhyde formique.

**Claims**

1. A process for preparing highly concentrated aqueous solutions of low viscosity of melamine/aldehyde resins, wherein in the first step the condensation is realized in the presence of water in an alkaline range, the second step is realized in an acidic range and finally the mixture is made alkaline by adding a basic compound, characterized by reacting to a precondensate in a first step melamine and an aldehyde at elevated temperature in an alkaline medium and in the presence of water together with at least one compound (I), selected from the group, consisting of an alkali sulfite, an alkaline earth sulfite, an alkali sulfamate, an alkaline earth sulfamate, an amino sulfonic acid, an amino carboxylic acid and an amino dicarboxylic acid, whereby the melamine, the aldehyde and the compound (I) are used in a molar ratio from 1:3.5 to 6:0.5 to 1, reacting then the so obtained precondensate in a second step at a pH value in the range from 5.5 to 7.0 to a polycondensate by making the mixture acidic by adding at least one acid compound (II), selected from the group, consisting of sulfamic acid, an amino carboxylic acid, an amino dicarboxylic acid, a hydroxy carboxylic acid, a polyhydroxy carboxylic acid and an amino sulfonic acid, and then making alkaline the obtained resin solution after the finished polycondensation by adding at least one basic compound (III).

2. The process according to claim 1, characterized in that the first step is realized at a pH value from 9.0 to 13.0.

3. The process according to any of claims 1 to 2, characterized in that the first step is realized at a temperature from 75°C to 100°C.

4. The process according to any of claims 1 to 3, characterized in that in the second step the precondensate from the first step and the compounds of the group II are used in a molar ratio from 1:0.1 to 3, relative to the melamine used in the first step.

5. The process according to any of claims 1 to 4, characterized in that in the second condensation step a mixture of sulfamic acid and glutamic acid, preferably a mixture of equal parts by weight of sulfamic acid and glutamic acid, is used as compounds of the group II.

6. The process according to any of claims 1 to 5, characterized in that the second step is realized at a temperature from 75°C to 100°C.

7. The process according to any of claims 1 to 6, characterized in that as basic compound (III) a compound, selected from the group consisting of an alkali hydroxide, an alkaline earth oxide, an alkaline earth hydroxide, an amine, a polyamine, mono-ethanol amine, diethanol amine, triethanol amine and a basic compound of a transition metal is used.

8. The process according to any of claims 1 to 7, characterized in that a basic aluminium or zinc compound is used as basic compound (III).

9. The process according to any of claims 1 to 8, characterized in that storage-stable aqueous resin solutions are prepared having a solids content from 30 to 50% by weight and a viscosity from 5 to 250 mPa.s.

10. The process according to any of claims 1 to 9, characterized in that the aldehyde is formaldehyde.